# EUROPÄISCHE PATENTSCHRIFT

(11) **EP 1 247 572 B1**
(45) Veröffentlichungstag und Bekanntmachung des Hinweises auf die Patenterteilung: **25.08.2004**
(21) Anmeldenummer: 02090037.9
(22) Anmeldetag: 25.01.2002
(51) Int. Cl.: B01J 20/30, B01J 20/20, B01J 20/26, B01D 39/20

(54) **Verfahren zur Herstellung eines Filterkörpers**
Process for the preparation of a filter body
Procédé de préparation d'un corps de filtre

(30) Priorität: 03.04.2001 DE 10117435
(43) Veröffentlichungstag der Anmeldung: 09.10.2002
(73) Patentinhaber: MSA Auer GmbH, 12059 Berlin (DE)
(72) Erfinder: Stadermann, Gabriele, 12059 Berlin (DE); Köhricht, Karl-Heinz, Dr., 12349 Berlin (DE)
(74) Vertreter: Wablat, Wolfgang, Dr.Dr.

(56) Entgegenhaltungen:
- GB-A- 1 045 694
- GB-A- 1 571 924
- US-A- 3 919 369
- US-A- 4 664 683
- US-A- 5 972 427

## Beschreibung

Die Erfindung betrifft ein Verfahren zur Herstellung eines Filterkörpers, bei dem ein Gemisch aus feinkörnigem schmelzbaren Polymeren und einem sorptiv wirkenden körnigen Material unter Wärme- und Druckeinfluss zu einem polymergebundenen Formkörper verpresst wird.

Ein derartiges Verfahren ist beispielsweise aus der DE 197 14 350 A1 bekannt. Gemäß diesem Verfahren wird zunächst ein feinteiliges Polyethylen mit vorzugsweise niedriger Dichte intensiv mit einem Aminoharzvorkondensat vermischt. Anschließend wird der so erhaltenen Reaktionsmischung ein körniges adsorptiv, absorptiv, chemisorptiv oder katalytisch wirkendes Material, zum Beispiel Aktivkohle, zugeführt und wiederum intensiv mit dieser vermischt. Das so entstandene Gemisch wird schließlich in eine Form gefüllt und bei einer Temperatur zwischen 90 und 180°C und einem Druck zwischen 0,0125 und 0,25 bar/cm² mit einem Presswerkzeug zu einem Formkörper verpresst. Das Polyethylen mit niedriger Dichte und niedrigem Schmelzpunkt bewirkt eine feste mechanische Bindung zwischen den Körnern des aktiven Materials. Gleichzeitig wird aber die aktive Oberfläche des Wirkmaterials nur minimal bedeckt. Das eingesetzte Bindemittel in Form von Aminoharzvorkondensat trägt zur Verteilung des thermoplastischen Polymeren im Aktivmaterial und zur Verbesserung der Haftwirkung des Polymeren an dem aktiven Material bei dessen minimaler Benetzung bei. Unter Wärmeeinwirkung schmilzt das Polyethylen unter Ausbildung von Polymerbrücken zwischen den Körnern des aktiven Materials, während es gleichzeitig zur Verschäumung, Vernetzung und Aushärtung der Aminoharzkomponente unter Bildung offenporiger, schaumähnlicher Polymeren mit guten sorptiven Eigenschaften kommt.

Die Herstellung von Filterkörpern nach dem oben beschriebenen Verfahren bereitet jedoch insofern Schwierigkeiten, als das Gemisch aus aktivem Material, Polyethylen und Harz nicht ausreichend schüttfähig ist und das portionsweise Einbringen in die Form mit einem erheblichen Arbeitsaufwand verbunden ist. Zudem ist eine gleichmäßige Verteilung der Mischungsbestandteile in dem Formwerkzeug nicht gewährleistet. Darüber hinaus entsteht ein zusätzlicher Aufwand durch die erforderliche Herstellung bzw. Bereitstellung des Aminoharzvorkondensats als Haftvermittler. Durch eine gegebenenfalls auftretende Teilentmischung beim Einfüllen in die Form und ein dadurch bedingtes ungleichmäßiges Aufheizen können Inhomogenitäten in dem Formkörper auftreten. Ein weiterer Nachteil der nach dem oben erläuterten Verfahren hergestellten Filterkörper besteht gerade bei deren Verwendung für Atemfilter darin, dass von diesen aufgrund des eingesetzten Harzes ein unangenehmer Geruch ausgeht, der nur durch ein aufwendiges Ausblasen des Filtermaterials mit Luft beseitigt werden kann.

Die US 5 972 427 beschreibt ein Verfahren zur Herstellung eines dünnwandigen, biegsamen Flächengebildes mit sehr geringer Schichthöhe des Filtermaterials. Dem Ausgangsmaterial zugemischtes Wasser, das für eine Homogenisierung der Mischung und für einen beschleunigten Wärmeübergang sorgt sowie zur Ausbildung makroskopischer Hohlräume beiträgt, kann aufgrund der dünnschichtigen Ausbildung des Filtermaterials in Form von Wasserdampf allmählich wieder entweichen.

Bei einem anderen, aus der US 4 664 683 bekannten Verfahren zur Herstellung eines in einer Form verpressten Filterkörpers, der aus einem sorptiven Material und einem Bindemittel besteht, erfolgt das Aufschmelzen des Bindmittels durch Zuführen eines heißen, inerten Gases in die in der Form befindliche Mischung. Bei diesen, in einer Form verpressten Filterkörpern kann es jedoch aufgrund der hohen Drücke und Temperaturen zu Überhitzungen und dadurch fehlerhaft ausgebildeten Filterkörpern kommen.

Der Erfindung liegt daher die Aufgabe zugrunde, ein Verfahren zur Herstellung eines Filterkörpers aus einem polymergebundenen körnigen, sorptiv und/oder katalytisch wirkenden Material anzugeben, das mit geringem Aufwand durchgeführt werden kann und durch eine homogene Mischung und Wärmeverteilung sowie eine schonende Wärmebehandlung zum Aufschmelzen der Polymeren in der Lage ist, Filterkörper mit hoher sorptiver Wirkung zur Verfügung zu stellen.

Erfindungsgemäß wird die Aufgabe mit einem Verfahren gemäß den Merkmalen des Patentanspruchs 1 gelöst.

Der wesentliche Erfindungsgedanke besteht mit anderen Worten darin, dass in einem ersten Schritt das sorptive Material unter Zusatz einer Flüssigkeit, deren Verdampfungstemperatur über der Schmelztemperatur der eingesetzten Polymeren liegt, mit den Polymeren zu einer homogenen, gut fließfähigen Masse vermischt wird. In dem darauffolgenden Schritt wird das so vorbereitete Gemisch in einem kontinuierlichen Massestrom unter weiterer Homogenisierung in ein Formwerkzeug gefüllt. Schließlich wird das Gemisch in einem dritten Schritt während des Pressvorgangs mit einem über das Presswerkzeug zugeführten heißen Gasstrom beaufschlagt, der durch die Mischung strömt und dessen Temperatur oberhalb der Verdampfungstemperatur des flüssigen Mediums liegt.

Im Gegensatz zu dem aus der DE 197 14 350 A1 bekannten Verfahren wird durch den Zusatz des verdampfbaren flüssigen Mediums ein homogenes, uneingeschränkt schüttfähiges Ausgangsprodukt bereitgestellt, das kontinuierlich in ein Formwerkzeug gefüllt werden kann und sich in diesem - als eine der Voraussetzungen für eine homogene Struktur des Filterkörpers - ohne Entmischungserscheinungen selbsttätig verteilt.

Beim Durchblasen des Gemisches während des Formgebungsprozesses mit dem heißen Gas verdampft die an dem sorptiven Material adsorbierte Flüssigkeit, so dass heißer Dampf mit konstanter Temperatur, das heißt, in homogener Wärmeverteilung und ohne Überhitzung in einzelnen Bereichen, auf die Polymeren wirken kann. Daneben wirkt die beigemischte, an dem sorptiven Material adsorbierte Flüssigkeit bzw. der aus dieser gebildete Dampf als Porenblocker oder Puffer zwischen den Polymeren und dem sorptiven Material, so dass lediglich schmale polymere Brücken zwischen den Körnchen aus sorptiv wirkendem Material entstehen und deren Poren überwiegend frei bleiben und das sorptive Material weitestgehend für die Adsorption und Absorption von in dem zu filternden Gas enthaltenen Schadstoffen zur Verfügung steht.

Es wird somit ein Verfahren zur Herstellung von Filterkörpern aus einem polymergebundenen sorptiv wirkenden körnigen Material angegeben, dass gegenüber dem nächstliegenden Stand der Technik mit verringertem Aufwand durchgeführt werden kann und dennoch nur aus dem Filtermaterial und den Polymeren bestehende Filterkörper gleichmäßiger Struktur und mit hohem Sorptionsvermögen bereitstellt. Darüber hinaus entfällt der Aufwand für die Beseitigung der bei nach dem eingangs erläuterten Verfahren hergestellten Filterkörper bekannten Geruchsbelästigung.

In einer besonders bevorzugten Ausführungsform der Erfindung besteht das in die Formpresse eingefüllte Gemisch für die Filterkörperherstellung zu 70 Teilen aus Aktivkohle, zu 30 Teilen aus Wasser und zu 5 Teilen aus einem feinteiligen Polyethylen mit einem Schmelzpunkt von 90 bis 95°C, während das durch das Gemisch in dem Formwerkzeug geblasene Gas Luft mit einer Temperatur im Bereich zwischen 135 und 165°C ist.

Die Erfindung wird nachfolgend in einem Ausführungsbeispiel näher erläutert:

Zunächst wird in einer geeigneten Mischvorrichtung aus in einem vorangegangenen Schritt mit Wasser versetzter Aktivkohle in einer Korngröße von 1 bis 2mm, wobei das Wasser an der Aktivkohle adsorbiert wird, und Polyethylenpulver in einer Korngröße von etwa 0,5 mm eine homogene, fließfähige Mischung hergestellt. Das Mischungsverhältnis zwischen Aktivkohle, Wasser und Polyethylen beträgt 70 : 35 : 5. Anschließend wird die Mischung unter weiterer Homogenisierung über ein Harris-Füllgerät unmittelbar in ein dem Filterkörper entsprechendes Formwerkzeug eingefüllt. Die guten Fließeigenschaften der Mischung erlauben ohne zusätzlichen Bearbeitungsaufwand eine kontinuierliche und über den Querschnitt des Formwerkzeugs gleichmäßig verteilte Befüllung. Während des darauf folgenden Pressvorgangs mit Drücken von 0.0125 bis 0.25 bar/cm2 wird über das Presswerkzeug heiße Luft mit einer zwischen 135 und 165°C liegenden Temperatur durch die in der Form befindliche Mischung geblasen. Bei diesem Prozess schmelzen die Polyethylenpartikel unter Ausbildung von Polymerbrücken zwischen den Aktivkohleteilchen, so dass nach der Abkühlung und Entformung ein mechanisch bearbeitbarer Formkörper zur Verfügung steht.

Durch den an der Aktivkohle adsorbierten Wasseranteil sind zunächst eine gleichmäßige Durchmischung mit homogener Teilchenverteilung und außerdem gute Fließeigenschaften des fertigen Gemisches gewährleistet. Mit der über das Presswerkzeug zugeführten heißen Luft als Wärmequelle wird eine homogene, schonende Erwärmung des in der Form befindlichen Materials erreicht, ohne dass partielle Überhitzungen zu befürchten wären. Eine entscheidende Funktion bei der Wärmezufuhr zu den Körnchen aus Polyethylen kommt jedoch auch dabei dem Wasser zu, das in seiner durch die Adsorption an den Aktivkohleteilchen bedingten vollständigen Verteilung in dem Gemisch während der durch die Heißluftzufuhr hervorgerufenen Verdampfung als Wärmeübertragungsmedium dient und alle Polyethylenpartikel bei einer im wesentlichen einheitlichen und konstanten Temperatur des Wasserdampfes, die nicht größer als 100°C ist, erfasst. Das heißt, die Wärme wird mittelbar, nämlich über den erzeugten Wasserdampf mit einheitlicher Temperatur, auf die Polyethylenpartikel übertragen. Gleichzeitig wirkt das Wasser bzw. der erzeugte Wasserdampf als Puffer zwischen den Aktivkohlekörnchen und den Polyethylenteilchen, so dass das aufgeschmolzene Polyethylen tatsächlich nur Polymerbrücken zwischen den Aktivkohlepartikeln bildet, deren überwiegender Teil somit für sorptive und gegebenenfalls katalytische Vorgänge zur Verfügung steht.

Gemäß dem zuvor beschriebenen Ausführungsbeispiel wurde als sorptives Material nicht imprägnierte Aktivkohle eingesetzt. Es kann jedoch auch imprägnierte Aktivkohle mit aufgrund des Imprägnierungsstoffes katalytischer und/oder chemisorptiver Wirkung und grundsätzlich auch ein anderer geeigneter sorptiver Stoff oder ein anderes, dem Polyethylen ähnliches Polymere verwendet werden. Die Erfindung ist weiterhin auch insofern nicht auf das obige Beispiel beschränkt, als anstelle von Wasser auch ein anderes flüssiges Medium mit ähnlichen Eigenschaften wie Wasser und/oder ein mit Luft vergleichbares gasförmiges Medium zur Wärmezufuhr für den Verdampfungsprozess und zum Abtransport der Flüssigkeit aus dem Filtermaterial benutzt werden kann.

## Patentansprüche

1. Verfahren zur Herstellung eines Filterformkörpers, bei dem ein Gemisch aus einem feinkörnigen schmelzbaren Polymeren und einem sorptiv wirkenden körnigen Material unter Wärme- und Druckeinfluss unter Aufschmelzen des Polymeren verpresst wird, wobei das Gemisch ein flüssiges Medium enthält, dessen Verdampfungstemperatur nicht größer als die Schmelztemperatur des Polymeren ist, und während des Verpressens in das Gemisch ein gasförmiges Medium mit einer oberhalb der Verdampfungstemperatur liegenden Temperatur eingeleitet wird, um eine Gas-Dampf-Phase zum Aufschmelzen des Polymeren und zum gegenseitigen Abpuffern der Partikel zu bilden und das flüssige Medium aus dem Filterformkörper auszutreiben.

2. Verfahren nach Anspruch 1, **dadurch gekennzeichnet, dass** als sorptiv wirkendes Material Aktivkohle und für deren polymere Bindung ein feinteiliges Polyethylen eingesetzt wird, während das flüssige Medium Wasser ist.

3. Verfahren nach Anspruch 2, **dadurch gekennzeichnet, dass** das Mischungsverhältnis bei 50 bis 90 Teilen Aktivkohle, 15 bis 50 Teilen Wasser und 2 bis 10 Teilen Polyethylen liegt.

4. Verfahren nach Anspruch 2, **dadurch gekennzeichnet, dass** das Mischungsverhältnis zwischen Aktivkohle, Wasser und Polyethylen bei 70 : 30 : 5 liegt.

5. Verfahren nach einem der Ansprüche 1 bis 4, **dadurch gekennzeichnet, dass** zunächst das flüssige Medium mit dem sorptiv wirkenden Material gemischt und an dessen Oberfläche adsorbiert wird und anschließend das Polymere zugemischt wird.

6. Verfahren nach einem der Ansprüche 1 bis 5, **dadurch gekennzeichnet, dass** als gasförmiges Medium Luft eingesetzt wird.

7. Verfahren nach Anspruch 6, **dadurch gekennzeichnet, dass** die Temperatur der zugeführten Luft zwischen 135 und 165°C liegt.

8. Verfahren nach einem der Ansprüche 1 bis 7, **dadurch gekennzeichnet, dass** das adsorptiv und/oder absorptiv wirkende Material mit einem chemisorptiv und/oder katalytisch wirkenden Stoff imprägniert ist.

## Claims

1. A method for producing a molded filter body in which a mixture of a fine-grain meltable polymer and a sorptive grainy material is pressed under the influence of heat and pressure by fusing the polymer, the mixture containing a liquid medium whose evaporation temperature is not greater than the melting temperature of the polymer, and in which a gaseous medium at a temperature above that evaporation temperature is passed into the mixture during pressing to form a gas-vapor phase for fusing the polymer, to buffer the particles from each other, and to drive the liquid medium out of the molded filter body.

2. The method according to claim 1, **characterized in that** active charcoal is used as a sorptive material and a fine-particle polyethylene is used for polymer bonding while water is the liquid medium added.

3. The method according to claim 2, **characterized in that** the mixing ratio is 50 to 90 parts of active charcoal, 15 to 50 parts of water, and 2 to 10 parts of polyethylene.

4. The method according to claim 2 wherein the mixing ratio of active charcoal, water, and polyethylene is 70 : 30 : 5.

5. The method according to any one of claims 1 through 4, **characterized in that** first the liquid medium is added to said sorptive material and adsorbed to its surface, then the polyethylene is added.

6. The method according to claims 1 through 5 wherein air is used as the gaseous medium.

7. The method according to claim 6, **characterized in that** the temperature of the air supplied is in the range from 125°C to 165°C.

8. The method according to any one of claims 1 through 7, **characterized in that** said adsorptive and/or absorptive material is impregnated with a material that has a chemisorptive and/or catalytic effect.

## Revendications

1. Procédé de préparation d'un corps moulé pour filtre, dans lequel on comprime sous l'effet de chaleur et de pression un mélange d'un polymère fusible à grains fins et d'un matériau en grains actif par sorption en faisant fondre le polymère, le mélange contenant un fluide liquide dont la température d'évaporation n'est pas supérieure à la température de fusion du polymère, et pendant la compression on ajoute au mélange un fluide gazeux dont la température est supérieure à la température d'évaporation, afin de former une phase gaz/vapeur pour faire fondre le polymère et pour le tamponnage mutuel des particules et pour chasser le fluide liquide hors du corps moulé de filtre.

2. Procédé selon la revendication 1, **caractérisé en ce que** l'on utilise à titre de matériau actif par sorption du charbon actif, et **en ce que** pour sa liaison polymère on utilise un polyéthylène à particules fines, tandis que le fluide liquide est de l'eau.

3. Procédé selon la revendication 2, **caractérisé en ce que** le rapport de mélange est de 50 à 90 parts de charbon actif, de 15 à 50 parts d'eau et de 2 à 10 parts de polyéthylène.

4. Procédé selon la revendication 2, **caractérisé en ce que** le rapport de mélange entre le charbon actif, l'eau et le polyéthylène est de 70:30:5.

5. Procédé selon l'une des revendications 1 à 4, **caractérisé en ce que** l'on mélange tout d'abord le fluide liquide avec le matériau actif par sorption et on le fait adsorber à sa surface, et ensuite on ajoute le polymère.

6. Procédé selon l'une des revendications 1 à 5, **caractérisé en ce que** l'on utilise de l'air à titre de fluide gazeux.

7. Procédé selon la revendication 6, **caractérisé en ce que** la température de l'air amené est comprise entre 135 et 165°C.

8. Procédé selon l'une des revendications 1 à 7, **caractérisé en ce que** le matériau actif par adsorption et/ou par absorption est imprégné d'une substance active par sorption chimique et/ou par voie catalytique.
